# EUROPEAN PATENT SPECIFICATION

(11) **EP 4 513 241 B1**
(45) Date of publication and mention of the grant of the patent: **10.12.2025**
(21) Application number: 24190760.9
(22) Date of filing: 24.07.2024
(51) Int. Cl.: G02B 5/30, G09F 3/00, G11B 7/25

(54) **METHOD OF CONTROLING DOMAIN OF ORGANIC COMPOUNDS SHOWING CONFORMATIONAL CHIRALITY**
VERFAHREN ZUR STEUERUNG DER DOMÄNE VON ORGANISCHEN VERBINDUNGEN MIT KONFORMATIONELLER CHIRALITÄT
PROCÉDÉ DE CONTRÔLE DU DOMAINE DE COMPOSÉS ORGANIQUES PRÉSENTANT UNE CHIRALITÉ CONFORMATIONNELLE

(30) Priority: 30.07.2023 PL 44571123
(43) Date of publication of application: 26.02.2025
(73) Proprietor: Uniwersytet Warszawski, 00-927 Warszawa (PL)
(72) Inventor: Szustakiewicz, Piotr, 70-896 Zalom (PL); Lewandowski, Wiktor, 02-495 Warszawa (PL); Majewski, Pawel, 05-850 Ozarow Mazowiecki (PL)
(74) Representative: JD&P Patent Attorneys Joanna Dargiewicz & Partners

(56) References cited:
- CN-A- 1 505 770
- CN-A- 105 759 529
- JP-A- H02 269 097
- JP-A- H1 062 740
- US-A1- 2004 058 132
- MACIEJ BAGINSKI ET AL: "Shaping Liquid Crystals with Gold Nanoparticles: Helical Assemblies with Tunable and Hierarchical Structures Via Thin-Film Cooperative Interactions", ADVANCED MATERIALS, VCH PUBLISHERS, DE, vol. 32, no. 1, 15 November 2019 (2019-11-15), pages n/a, XP071818062, ISSN: 0935-9648, DOI: 10.1002/ADMA.201904581

## Description

### Field of the invention

The subject of the invention is a method of controlling domains of organic compounds exhibiting conformational chirality by controlling the fronts of their phase transformations. The control enables obtaining arbitrarily large areas with a selected helicity, as well as arbitrary patterns composed of domains with opposite helicities, which allows recording information in two-dimensional space.

### Background of the invention

### Morphologically chiral liquid crystalline phases

Mesogenic compounds (i.e. those that form liquid crystalline phases, LC) are widely used in many new technologies such as displays [1], temperature sensors, [2], etc.

From a practical point of view, liquid crystalline phases that exhibit chirality are of particular interest [3,4]. Chirality is a property of three-dimensional macroscopic objects, molecules and supramolecular aggregates, which lack planes of symmetry or a centre of symmetry and are therefore not identical to their mirror image. In the case of organic molecules, chirality is of great importance when it comes to the properties of compounds, with particular emphasis on optical properties, i.e. interactions with electromagnetic waves, which are also chiral and can be left- or right-handedly polarised.

Most often chirality is defined at the stage of compound synthesis by the spatial arrangement of atoms and covalent bonds and cannot be changed later, and is associated, for example, with the presence of an asymmetric carbon atom, i.e. carbon bonded to four different substituents. However, there are such liquid crystals that even if the mesogenic compound does not have asymmetric carbon atoms, at the stage of crystallisation (at the stage of sample cooling, during phase transition) the shape of the molecule adopts a chiral conformation. A similar phenomenon is observed for quartz crystals [5] composed of achiral tetrahedral SiO₄ units. Very often, the proximity of a molecule with a specific conformation forces the next ones to adopt the same conformation. This phenomenon is called chirality synchronisation and is particularly important for the technique developed here [5]. This phenomenon leads to the formation of morphologically chiral supramolecular systems in the shape of helical nanofilaments, helical microfilaments or nanotubes composed of right- or left-handed coiled layers [4]. These morphologically chiral entities have cross-sections with diameters of the order of tens or hundreds of nanometres [4,6]. There are many mesogenic compounds that exhibit such properties, e.g. 1,3-phenylene bis(4-(4-nonyloxyphenyliminomethyl) benzoate) (and analogues of this compound), *α*,*ω*-bis(4-alkoxy-azobenzene-40-carbonyloxy)alkene, or N,N'-bis[2-hydroxy-5-(4'-n-tetradecylphenylazo)benzylidene]-4-nitro-1,3-phenylenediamine [4].

In typical self-assembly conditions of this type of mesogenic compounds (i.e. without adding any external chiral factors), a statistically equal number of right-handed and left-handed helices are formed, but they are not distributed completely randomly - micrometric-sized areas are formed in which all helices adopt one handedness - these are the so-called chiral domains. The size and shape of chiral domains depend largely on the type of mesogenic compound used, as well as on the rate and conditions of the crystallisation process. Such samples are conglomerate in nature or, for two-dimensional systems, a mosaic, composed of randomly arranged domains, containing supramolecular systems with a given sense of handedness.

### Methods for controlling morphologically chiral liquid crystal phases

Due to the different properties of chiral LC structures with opposite handedness, methods for controlling the chirality of morphologically chiral liquid crystal phases are sought, leading to obtaining materials with a dominant sense of one of the handednesses in the entire sample volume. So far, the following methods have been developed to obtain the enantiomeric excess of one of the handednesses:
(1) induction of chirality using circularly polarised light as a stimulus to break the symmetry [6-8], this approach allows for reversible changes in chirality;
(2) use of chiral additives (dopants), i.e. molecules or particles with an inherently chiral structure, which when added in small amounts force a specific chiral orientation of the liquid crystal phase [9,10]. This method is often called 'sergeants and soldiers' where the role of sergeants is played by a chiral dopant, while the soldiers are liquid crystal molecules that adopt chirality according to the "orders" of the sergeants [11,12]. This approach requires the use of a chiral compound, which complicates the system, and the obtained chirality is irreversible;
(3) use of chiral substrates;
(4) use of twisted liquid crystal cells.

Due to the different properties of chiral LC structures with different orientation in space, ways are sought to control the orientation of chiral individuals in morphologically chiral LC phases, e.g. by:
(1) limiting the growth space
(2) illumination with circularly polarised light.

Due to the different properties of chiral LC structures with different morphology, ways are sought to control it:
(1) by altering the molecular architecture of the compounds forming the LC phase;
(2) by changing the cooling kinetics.

Examples have long been known in which the addition of a chiral compound to a non-chiral liquid crystal phase causes the formation of a chiral phase [13]. A good example of this is the research conducted by Prof. Smalyukh, whose group focuses on the study of defects that imitate the configuration of fields in particle physics, optics or cosmology with their topology [14]. The source of these defects in the liquid crystal forming the nematic phase may be chiral particles such as helices or springs [15]. Moreover, such defects in the chiral liquid crystal phase may show interesting interactions with light and be used to control it [16].

The use of light in the production of chiral liquid crystal phases is not limited to the induction of chirality using circularly polarised light - the use of photoalignment patterns allows for the control of the helical pitch of mesogenic compounds for the production of materials that selectively reflect chiral light [17]. The use of a substrate with a specific pattern, on which a chiral liquid crystal is then placed, also allows for the control of the arrangement of the mesogenic compound molecules [18].

### Control of the handedness and distribution of chiral domains of organic compounds in thin films

From the point of view of the state of the art, it is worth mentioning that by controlling the organisation or polymerisation process, it is possible to obtain thin films of organic materials with a controlled, arbitrary distribution of chiral domains:
1) each of which either does not exhibit chirality or exhibits chirality, where those exhibiting chirality have the same handedness in a given material (all chiral ones are either right-handed or left-handed),
2) each of which exhibits right-handed or left-handed.

The disadvantage of these methods is the use of a chiral inducer (materials of constitutional chirality) or circularly polarised light, which imposes the requirement to work with enantiomerically pure organic compounds, causing an increase in the cost of this type of methods. The increase in costs is related to the requirement to synthesise two enantiomers or to separate them from a mixture of two enantiomers if the synthetic methods did not lead to a product with the selected chirality. In addition, selective spatial deposition of both enantiomers on the substrate is required. In the case of circularly polarised light, it is necessary to use spatial masks to selectively illuminate selected fragments of the material.

### Uses of morphologically chiral liquid crystal phases

Control over the chirality of mesogenic compounds is important due to the different properties of interaction with the light of chiral systems, which is of particular importance in optics, where manipulation of light polarisation plays an irreplaceable role in many technological implementations of mesogenic compounds and is the basis of key technologies of the 19th century such as displays. Morphologically chiral liquid crystal phases are intensively studied due to their possible use as:
(1) materials exhibiting high levels of optical asymmetry, with potential applications, e.g. in detecting circularly polarised light [19];
(2) components of composites exhibiting emission of circularly polarised light [20], with potential applications in multiplexed data transmission based on circularly polarised light [21];
(3) composite components exhibiting plasmonic chirality [9,22,23], with potential applications, e.g. as ultra-thin chiral polarisers [23];
(4) patterns aimed at preventing forgery [23]; in this field, it is necessary to impose a spatial pattern and it consists in controlling the orientation of helical nanofilaments; importantly, in this method the handedness domain direction is not important;
(5) photonic crystals, with potential applications as polarising diffraction gratings [24-26], waveguides [27] or photonic structures with unusual optical properties [28-30].

A particularly interesting application is the recording of information, e.g. patterns aimed at preventing forgery. Below, we discuss in detail the materials used for these purposes, which were based on morphologically chiral LC phases, and more broadly, chiral LC phases [31]. Control over the chirality of mesogenic compounds is important due to the different properties of chiral systems interacting with light, which is of particular importance in optics, where manipulation of light polarisation plays an irreplaceable role in many technological implementations of mesogenic compounds and is the basis of key technologies of the 19th century, such as displays. The use of helical, oriented liquid crystal phases with controlled parameters for manipulating light polarisation, allows the production of materials capable of 100% reflection of light with a given circular polarisation [32]. Moreover, liquid crystal compounds forming chiral phases such as helices, when the helix pitch is matched to the wavelength of light, can form three-dimensional photonic crystals exhibiting a photonic energy gap [33].

Due to their application potential, 2D thin films are a frequently used form in which liquid crystal materials are used. This is the most optimal form in terms of maximizing the surface area while maintaining a constant thickness and therefore finds a number of applications, e.g. in optics.

There is a great need in the field for new methods of recording information.

The aim of the present invention was therefore to develop a new method of recording information using the spatial arrangement of chiral domains of organic compounds through controlled synchronisation of conformational chirality.

Therefore, the subject of the present invention is a method for controlling the spatial arrangement of domains of mesogenic compounds exhibiting the ability to synchronise chirality by controlled synchronisation of conformational chirality, wherein the area of a thin organic film of a mesogenic compound forming a conglomerate of domains is heated above the isotropisation temperature of the mesogenic compound to obtain a specific chirality in a given area, and the shape of the heated area corresponds to a selected pattern, allowing control of the crystallisation front, wherein the heating is carried out by means of area illumination with laser light of a wavelength corresponding to the high absorbance of the melted mesogenic compound, and/or area heating of a substrate on which the thin organic film of the mesogenic compound is placed, and/or by area illumination with laser light of a wavelength corresponding to the high absorbance of a dye added to the thin organic film.

Preferably, the laser light absorption causes the temperature of the thin organic film to be raised from the temperature to which the film is preheated to at least the temperature of the phase transition of the organic mesogenic compound to the isotropic phase (T_{ISO}).

Preferably, the substrate is a transparent substrate, such as a glass plate, quartz glass, sapphire, polymer foil.

Preferably, the heating is carried out linearly to obtain a crystallisation wave which starts from the selected domain with the desired handedness, then passes to the area with domains with undesired or mixed handedness, which as a result of chirality synchronisation initiates crystallisation of the domain with handedness in accordance with the selected, adjacent domain.

Preferably, the heating is carried out pointwise to obtain a crystallisation wave which starts its travel pointwise, without contact with the crystallized area, in the centre of the area and moves radially outward.

Preferably, the heating of a given area is repeated until the desired chirality is obtained. Preferably, for areas with a size exceeding the maximum illuminated area at one time of the thin organic film of the organic mesogenic compound exhibiting the ability to synchronise chirality, said method is controlled by applying the following steps, in which:
- a map of chiral domains is prepared for a selected area of the thin film;
- the enantiomeric excess of the desired chirality is assessed on a given area of the sample;
- if the degree of coverage is greater than a predetermined value, preferably 90%, heating of the next area is proceeded to;
- if the degree of coverage is less than a predetermined value, heating is carried out on the given area, continuing the procedure described above.

CN105759529A discloses a method for laser mechanical control of a chiral liquid crystal polymer film.

The chiral nematic liquid crystal polymer film with a radial helical structure is formed on a substrate. When pulsed laser radiation excites a graphite layer on the film, it generates plasma, which creates localized high pressure that alters the helical pitch of the film. This process enables precise and controllable mechanical or gradient adjustments to the helical pitch. Additionally, the laser allows for easy modification of the irradiated region and area, while also inducing colour and morphology changes on the film's surface. CN105759529A does however not present a method for regulating the spatial arrangement of domains with a specific chirality (i.e., handedness) in a designated area. CN1505770A discloses a liquid crystal device featuring a polymerizable LC material between two substrates, allowing post-processing through photopolymerization to modify its optical properties or stored information. A preferred version uses chiral LC materials, such as cholesteric liquid crystals, which reflect circularly polarized light at specific wavelengths, enhancing security for polarization-selective observation. Actinic radiation, like ultraviolet light, polymerizes the LC material, enabling designs or patterns, particularly with thermochromic materials, through techniques like photomasks or laser curing. This process allows colour-specific patterns to be written and fixed by selectively curing the material at elevated temperatures. However, CN1505770A does not propose a method for controlling the spatial arrangement of domains with a specific chirality (i.e., handedness) within a defined area. JPH1062740A discloses a projection-type reversible display medium that utilizes two laminated reversible thermosensitive recording layers (2,3), each made of cholesteric polymer liquid crystal material. These layers have opposing helical structures but identical cholesteric pitches. The display operates by controlling transmitted light through heat application, switching between a transparent (isotropic glass state) and a coloured state (fixed cholesteric pitch below the glass phase transition temperature). Cross-linking the liquid crystal layers stabilizes the display's orientation and characteristics, while simplifying the element configuration and manufacturing process. The thermoreversible display medium allows information display and recording using a laser or thermal head. Heating specific areas above the liquid crystal phase transition temperature and rapidly cooling them fixes a transparent isotropic glassy state. Non-heated areas retain their cholesteric structure and exhibit selective reflection. This reversible process enables display and recording by creating transparent and reflective regions. However, JPH1062740A does not anticipate a method that allows to control the spatial arrangement of domains with a specific chirality (i.e. handedness) in a given area. JPH02269097A discloses an optical information recording medium that utilizes a phase transition mode to record visible information by heating a polymeric material during recording and erasing. The device features an undercoat layer made of elastomeric material and an overcoat layer with high heat resistance. A polymer nematic liquid crystal with a higher isophase transition temperature than the glass transition temperature is used for the visible information display part. When heated, this material can transition from an opaque to a transparent state, allowing information to be written. Other materials like smectic polymer liquid crystals and chiral cholesteric liquid crystals are also suitable for this application. JPH02269097A does however not present a method for controlling the spatial arrangement of domains with a specific chirality (i.e., handedness) in a designated area. US2004058132A1 describes a method for generating a 3-dimensional effect for decorative and security applications using chiral liquid crystal (CLC) materials. The method involves creating two image layers: one reflecting right-handed circularly polarized light and the other reflecting left-handed circularly polarized light. These layers are made from polymerized or cross-linked CLC material, formed by applying polymerizable CLC material to a substrate, aligning it, and polymerizing it at temperatures below 60°C. The process allows easy creation of 3D effects without complex techniques, using two-stage printing, coating, and UV curing. The design features a first image layer on a substrate, optionally covered by an intermediate layer, with the second image layer placed on top. The resulting images can be viewed with standard circular polarizer devices. However, US2004058132A1 does not anticipate a method that allows to control the spatial arrangement of domains with a specific chirality (i.e. handedness) in a given area. In the paper "Shaping Liquid Crystals with Gold Nanoparticles: Helical Assemblies with Tunable and Hierarchical Structures Via Thin-Film Cooperative Interactions", ADVANCED MATERIALS, VCH PUBLISHERS, DE, vol.32, no.1, 15 November 2019 (2019-11-15), MACIEJ BAGINSKI ET AL present a strategy for creating helical structures by combining liquid crystals and gold nanoparticles in thin films. This method yields nanocomposites with long-range hierarchical order, formed through nanoparticle-coated twisted nano-ribbons and organized bundles. The helical assembly is controlled by functionalized nanoparticles, and the thickness of the nanocomposites can be reversibly adjusted due to the polymorphic nature of the liquid crystal. The approach is versatile, enabling the creation of helices from nanoparticles of various shapes and sizes.

However, MACIEJ BAGINSKI ET AL do not propose a method for controlling the spatial arrangement of domains with a specific chirality (i.e., handedness) within a defined area.

The subject of the invention is illustrated in the drawings, where:
Fig. 1 presents a schematic illustration showing the evolution of thermal fields during the illumination of the sample with a laser for two types of approaches forcing a change in the handedness of the liquid crystal in a selected area;
Fig. 2 presents a diagram of the system for melting chiral domains according to the present invention;
Fig. 3 presents a decision scheme for melting a larger area;
Fig. 4 presents a photo of the sample before (left) and after melting (right), the photo was taken using polarisers that allow distinguishing chiral domains with opposite handednesses.

### Liquid crystal information recording systems

One of the proposed applications of the method according to the invention is the creation of difficult to counterfeit and at the same time easy to verify patterns aimed at preventing forgery. Mesogenic compounds are often proposed for this purpose due to their optical properties, which are relatively easy to modify and the fact that optical verification is relatively convenient and widely used. Usually, in the methods proposed in the literature, it is assumed to create a specific pattern (characteristic image, barcode or QR code) on the surface of a thin liquid crystal film in such a way that this pattern is visible only under strictly defined optical conditions, for example:
(1) by emitting light of a specific colour [34,35],
(2) visible only with the appropriate arrangement of polarisers [36], or
(3) changing colours in a characteristic way when changing the arrangement of polarisers [31].

In the method according to the present invention, the obtained pattern consists of the same phase as the rest of the area but with the opposite handedness, which is the first such security feature. Due to the fact that the areas within the pattern differ only in handedness, it is not possible to see this pattern without using polarisers. Moreover, to verify the authenticity of the pattern, two linear polarisers are sufficient (which are relatively cheap, what is more, most currently used computer monitors emit linearly polarised light): when placing the sample between crossed polarisers, the pattern will be revealed when the polarizers are slightly uncrossed - i.e. one of the areas with a specific handedness will become darker and the other, with the opposite handedness, will become brighter. When changing the direction of the uncrossing of the polarisers, the change in brightness will be of exactly the same intensity, but in the opposite direction, which is very easy to verify with the naked eye.

### Detailed description of the invention

The present inventors have unexpectedly found that the mechanism of chirality synchronisation using a laser system illuminating the LC material enables control over the handedness of chiral domains on a micrometre scale. The proposed approach allows for an area-wise change of the helicity of chiral domains of a thin film of the material. An arbitrarily selected area of a thin film of a morphologically chiral liquid crystal, forming a conglomerate of domains, is heated above the isotropisation temperature of a given mesogenic compound (e.g. 172°C for the P9OPIMB compound) [37] by means of area illumination with laser light at a wavelength corresponding to the high absorbance of the melted mesogenic compound (usually the optimal values are in the intermediate and near ultraviolet range, 200-400 nm as organic compounds usually absorb this wavelength range well, however, it can also be the visible range, 400-800 nm; the wavelength is determined by the structure of the compound and its organisation in the films). In order to enable the illumination of an area of any shape using a laser built into the microscope, a spatial modulator - a system of miniature mirrors (digital micromirror device, DMD) was used.

This approach is characterised by a high degree of versatility - the beam reflected from the DMD can illuminate any area in a dynamic manner, i.e. the shape of the illuminated area can change depending on time. This is particularly important, as it allows for controlling the melted area in real-time, by controlling the shape of the illuminated area and the intensity of light incident on the sample. Thanks to these dynamic changes in the beam shape, we can melt the organic compound in a controlled manner, and consequently control the local melting of the material and its crystallisation. Controlling crystallisation here means the possibility of arbitrarily shifting the crystallisation front of the organic compound. Due to the phenomenon of chirality synchronisation, the unmelted material will give the sense of chirality to the molecules crystallising in its immediate vicinity. We therefore have the freedom to choose the melted area and the area that we leave unmelted, which gives the possibility of imposing handedness on the areas subjected to illumination. By melting subsequent domains, it is possible to obtain arbitrarily (freely) designed patterns.

The subject of the invention is therefore a method of recording information in the form of patterns built from chiral domains of an organic compound by using the phenomenon of chirality synchronisation. Preferably, in cases where the isotropisation temperature (T_{ISO}) of the mesogenic compound is relatively high (>70°C), a heated substrate should be used to bring the sample temperature closer to the isotropisation temperature. Preferably, when the substrate temperature is around (T_{ISO}) - 20°C. Despite the applied heating of the sample, the possibility of observing the material in transmission mode must be maintained over the entire area where the heating process is currently being carried out. For this purpose, a commercially available heating stage in the form of a metal heating block with a small hole in the middle, enabling the observation of the sample in transmission mode can be used.

### Domain remelting

For a given liquid crystal compound to be remelted using the method of the present invention, the following conditions must be met:
a) the compound must be able to form domains;
b) these domains must be detectable by a microscopic system, e.g. by observing the sample between slightly crossed polarisers - e.g. by exhibiting the phenomenon of circular birefringence;
c) the LC compound can be heated by light, e.g. it absorbs a wavelength corresponding to the source, or is deposited on a surface that heats up under the influence of light used in the source;
d) remelting a compound that does not absorb in a given range of electromagnetic wavelengths can be achieved by adding dye molecules that absorb electromagnetic waves used in the source, provided that this compound is at least partially miscible with LC.

There are two types of approaches to forcing a specific handedness of helices in a selected area:
1) directed crystallisation using an adjacent domain with the desired handedness (seeded growth);
2) creation of a new domain without contact with adjacent domains during the growth stage.

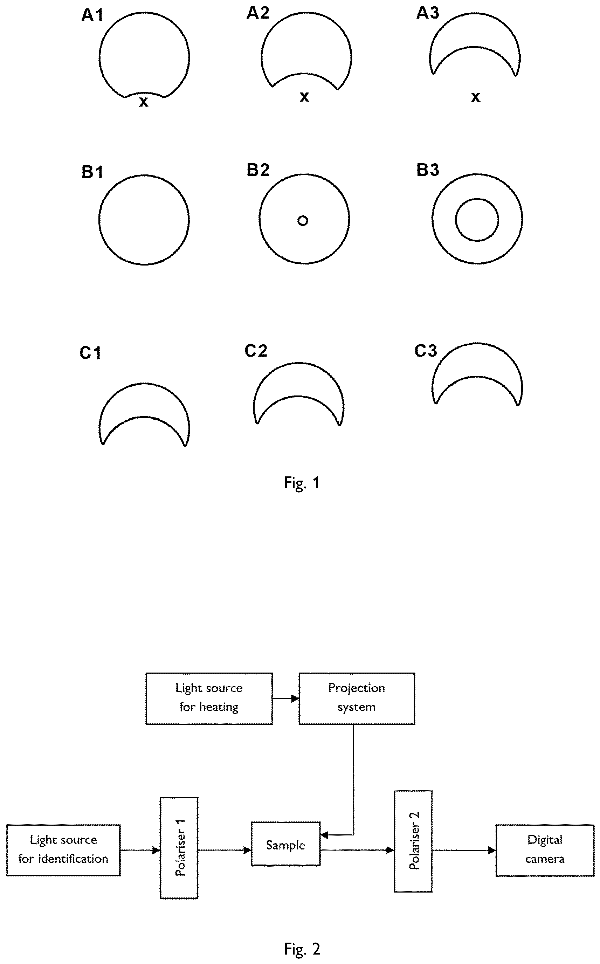

To better understand the process, attention should be paid to the crystallisation wave running along with the changing illumination area, i.e. the shifting isothermal area being a closed linear shape, for which the temperature corresponds to the phase transition temperature of the mesogenic compound (Fig. 1). In the first approach, we allow the crystallisation wave to start its course from the selected, adjacent domain with the desired helix, then passing through the entire melted area, and, as a result of the chirality synchronization effect, the crystallization of the domain with the helix according to the selected, adjacent domain is initiated.

To understand the ongoing process more easily, it is necessary to pay attention to the crystallisation wave along with the changing lighting area, i.e., the sliding isothermal area being a closed linear shape, for which the temperature corresponds to the phase transition temperature of the mesogenic compound (Fig. 1).

In the first approach, we allow the crystallisation wave to start its course from a selected, neighbouring domain with the desired handedness, then passing through the entire melted area, and, as a result of the chirality synchronisation effect, the crystallisation of the domain with handedness in accordance with the selected, neighbouring domain is initiated. In the second approach, the evolution of the illuminated area proceeds in such a way that the crystallisation wave starts its course without contacting the crystallised area, i.e. it starts pointwise in the centre and starts running radially outward. This action forces the creation of a new chiral domain with a random handedness. In the case when the randomly selected domain has an undesirable handedness, the process can be repeated. The third approach involves moving the illuminated area through the majority of the sample in such a way that the crystallisation line moves perpendicularly to the movement direction of the heated area.

Fig. 1 shows a schematic illustration of the evolution of thermal fields during the laser illumination of the sample for two types of approaches forcing the liquid crystal handedness change in the selected area. The black lines symbolise the area where the temperature is constant and equal to T = T_{ISO}, where T_{ISO} is the isotropisation temperature of the mesogenic compound. For each type of approach, three thermal field states have been presented.

The top row (A1, A2, and A3, respectively) shows remelting using nucleation from an adjacent domain with the desired handedness (here marked with an "x"). The middle row (B1, B2, and B3, respectively) shows remelting with the formation of a new domain without contact with adjacent domains. The bottom row (C1, C2, and C3, respectively) shows the method of remelting by continuously moving the heated area through the sample. In each of the three cases, it often happens that more than one domain nucleates during remelting. To minimise this phenomenon, the speed of the crystallisation wave during remelting should be reduced, but it may not be possible to completely eliminate this phenomenon. If this phenomenon occurs, remelting in a given area should be repeated until a single domain with the desired handedness is obtained.

### Method of determining what domains are on the sample (differential maps or chirality maps)

A key element of the invention is the ability to determine the rotation, shape and position of chiral domains in real-time. For this purpose, the microscopic system (Fig. 2) comprises a system of motorised polarisers and a digital camera. The arrangement of the elements relative to each other is as follows (from top): digital camera, polariser no. 1, sample, polariser no. 2, light source. In order to determine the shape and handedness of the chiral domains, the first measurement of the light intensity is performed depending on the position in the XY axis on the selected area using a camera (photo) for polarisers rotated relative to each other by (polariser no. 1 and no. 2, respectively): 0°, 90° - n. Then, a second measurement is performed for the arrangement of polarisers rotated relative to each other by 0°, 90° + n; where n is a small angle in the range (n > 0°) & (n <= 15°), with the most commonly used values being n = 5° and n = 10°. The appropriate value should be chosen experimentally, taking into account factors such as the intensity of the light from the source, the thickness of the sample and the ORP (optical rotatory power) value of the material in order to maximise the contrast between domains with opposite handedness. To facilitate data analysis, the two measurements are then compared and for each point (i.e. pixel in the image) the difference in intensity between the first and second measurement is calculated. The map obtained in this way (hereinafter referred to as the differential map) has positive and negative areas corresponding to the shapes of the chiral domains on the samples.

### Remelting over a larger area

Since the area that can be remelted at one time is limited by the size of the DMD, in order to take control over the handedness of the domains over a larger area, zone remelting is performed in the sense of area by area. The maximum size of the area remelted at a given moment depends on the laser power, the magnification of the microscope objective used and the absorbance value of the laser light by the liquid crystal material. In typical conditions, a 20X objective was used and the selected area was uniformly illuminated. The sample is placed on a motorised translation stage, capable of precise change of position in the XY axis, thanks to which moving between subsequent areas of the sample can be performed automatically, allowing control over chirality over an arbitrarily large area (limited only by the capabilities of the translation stage used). For this purpose, a map of areas is entered into the program memory, according to which the remelting of each area is then performed. Such a map can be, for example, an image with a specific resolution, in which one pixel corresponds to one area and the pixel colour (black or white) determines the handedness of the domains. In order to ensure the continuity of the area with a controlled handedness of the domains when melting large areas of the sample, the second type of melting (B1-B3) was used to a large extent, with the shape of the laser spot being a square that completely filled the maximum area melted at once.

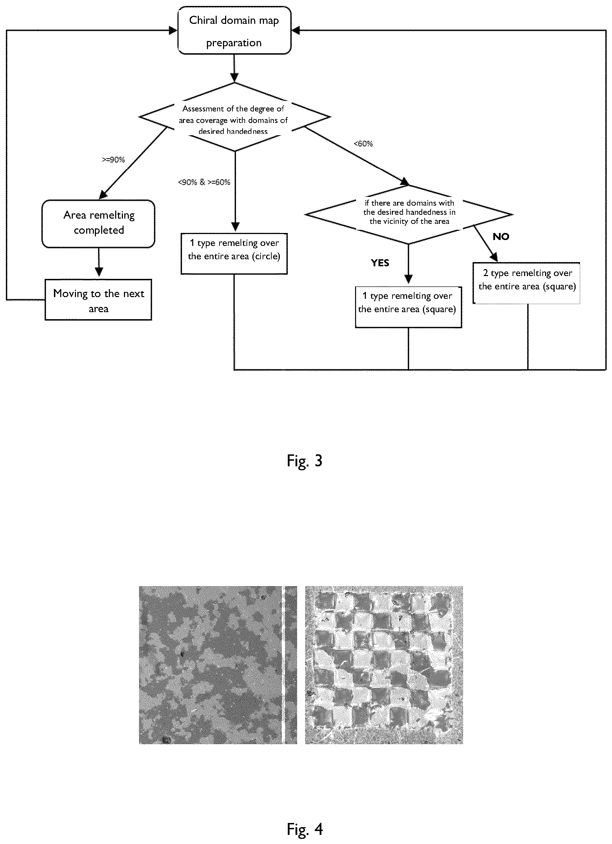

Thanks to this, the successive melted areas connect with each other to form an uninterrupted, large area. If the percentage of the surface covered with domains of the desired handedness is large in the given area, i.e. exceeds a certain set value (this value was usually in the range >50% & <70%, most often 60%), the first type of melting is performed, where the shape of the projected laser was a circle with a diameter smaller than half of the side of the entire melted area. If the desired domains constitute at least 90% of the surface of the entire area (values in the range >85% & <95% were used), it is assumed that it is possible to proceed to melting the next area. The decision scheme used when melting larger areas is shown in Fig. 3. This area is being divided into smaller areas, each of which corresponds to the maximum area melted at once. The method developed by the Inventors according to the invention has a number of advantages compared to the methods known from the prior art:
1. The possibility of recording an arbitrary pattern built of chiral domains of opposite handedness. 2. Simplification of the pattern recording process associated with the use of only achiral compounds.

The above and other advantages and benefits of the present invention will become more apparent based on the examples of embodiments of the invention presented below.

### EXAMPLES

### Example 1: preparation of a sample in the form of a thin film

In order to prepare a thin film sample of liquid crystal material, 1,3-phenylenebis[4-(4-oleyloxyphenyliminoethyl)benzoate] was coated onto a glass plate of size 10x10 mm and thickness <400 µm. Then, in order to maintain a specific sample thickness, glass beads of diameter 10.1 µm were placed on the sample and the whole was covered with another glass plate. Then, such a system was heated to the isotropisation temperature, which is selected for a specific mesogenic compound and here it was 140°C and it was cooled to room temperature (heating time and cooling time are selected to enable the formation of a domain conglomerate, in this case it was about 2 minutes), while during cooling the sample was pressed against the substrate to ensure a uniform thickness of the thin LC film between the glass plates. The sample obtained in this way has randomly distributed domains of small size. Analogous results are obtained for glass plates of any size larger than the later melted area, for glass plates with a thickness in the range of 400 - 10000 µm, and using beads (separators) with sizes in the range of 100 nm - 50 µm.

### Example 2: construction of the microscope system

The following elements were added to the existing Zeiss microscope: a motorised translation stage in the XY axis, placed at the imaging location of the microscope; a rotating linear polariser based on the ELL14 from Elliptec, just above the light source under the translation stage, as well as in front of the digital camera; a heatable heating plate based on a glass plate with an ITO layer, placed on the translation stage; an automatically removable dichroic mirror located on the optical path at the point where the light beam is collimated; the DMD from the projector, located in such a place that the DMD image can be placed in a parallel beam of light in the microscope using a dichroic mirror; a laser whose parameters (power and wavelength) are selected for a specific mesogenic compound undergoing the melting process, so as to ensure its isotropisation; in this case, a 16 W laser with a wavelength of 450 nm was used. The laser was positioned so as to illuminate the DMD.

### Example 3: remelting using a constructed microscopic system

In order to perform domain remelting to obtain a given pattern consisting of domains with the opposite sense of chirality (chiral domains pattern), a sample consisting of an organic material meeting the process conditions is placed in a microscopic system on a transparent heating plate. It is then thermostated to a temperature selected for a given type of material, so that it is below the isotropisation temperature, so that it allows for obtaining a chirality map, as well as for a local increase in temperature during laser illumination (so that isotropisation occurs locally). For the compound 1,3-phenylenebis[4-(4-oleyloxy-phenyliminonetyl)benzoate] used, this was a temperature of 104 °C. Using an optical system, the arrangement of chiral domains on the sample is examined and a chirality map is created. Then, the algorithm, based on the obtained chirality map, selects the type and location of laser illumination in order to perform domain remelting. The final effect of remelting is to obtain a previously assumed pattern of chiral domains, loaded into the program memory. In this particular example, the goal was to obtain a checkerboard pattern, composed of domains with opposite handednesses (Fig. 4).

### Example 4: obtaining a pattern of domains exhibiting plasmonic chirality

In order to perform the melting of domains exhibiting plasmonic chirality, a sample consisting of an organic material meeting the process conditions and plasmonic nanoparticles (any that can be mixed with the organic matrix used, in this case metallic, spherical gold nanoparticles with a diameter of 15 nm) is placed in a microscopic system on a transparent heating plate and then thermostated to a temperature selected for a given type of material, so that it is below the isotropisation temperature, so that it allows for obtaining a chirality map, as well as for a local increase in temperature during laser illumination (so that isotropisation occurs locally). For the mixture of 1,3-phenylenebis[4-(4-oleyloxy-phenyliminonetyl)benzoate] and spherical gold nanoparticles used, it was 104 °C. Using an optical system, the arrangement of chiral domains on the sample is examined and a chirality map is created. Then, based on the obtained chirality map, the algorithm selects the type and location of laser illumination in order to perform domain remelting. The final effect of remelting is obtaining a previously assumed pattern of chiral domains, uploaded to the program memory. In this particular example, the goal was to obtain a pattern composed of domains with one selected handedness. Each domain exhibits chiral properties in the range of electromagnetic wavelengths with lengths characteristic of the organic compound and nanoparticles used.

### Example 5: obtaining a pattern of domains exhibiting the emission of circularly polarised light

In order to perform the melting of domains exhibiting plasmonic chirality, a sample consisting of an organic material meeting the process conditions and an additive of an organic compound that exhibits photoluminescent properties (e.g. 2% by weight 1,1,2,2-tetraphenylethene) is placed in a microscopic system on a transparent heating plate and then thermostated to a temperature selected for a given type of material, so that it is below the isotropisation temperature so that it allows for obtaining a chirality map, as well as for a local increase in temperature during laser illumination (so that isotropisation occurs locally). For the mixture of 1,3-phenylenebis[4-(4-oleyloxy-phenyliminonetyl)benzoate] and 2% by weight 1,1,2,2-tetraphenylethene, this was 104°C. Using an optical system, the arrangement of chiral domains on the sample is examined and a chirality map is created. Then, the algorithm, based on the obtained chirality map, selects the type and location of laser illumination in order to perform domain remelting. The final effect of remelting is obtaining a previously assumed pattern of chiral domains, uploaded into the program memory. Each domain exhibits the emission of circularly polarised light.

### Bibliography

1. Chen, H.W.; Lee, J.H.; Lin, B.Y.; Chen, S.; Wu, S.T. Liquid crystal display and organic light-emitting diode display: present status and future perspectives. Light Sci. Appl. 2018, 7, 17168, doi:10.1038/Isa.2017.168.
2. Moreira, M.F.; Carvalho, I.C.S.; Cao, W.; Bailey, C.; Taheri, B.; Palffy-Muhoray, P. Cholesteric liquid-crystal laser as an optic fiber-based temperature sensor. Appl. Phys. Lett. 2004, 85, 2691-2693, doi:10.1063/1.1781363.
3. Dierking, I. Chiral liquid crystals: Structures, phases, effects. Symmetry. 2014, 6, 444-472, doi:10.3390/sym6020444.
4. Le K.H.; Takezoe, H.; Araoka, F. Chiral Superstructure Mesophases of Achiral Bent-Shaped Molecules - Hierarchical Chirality Amplification and Physical Properties.. Adv. Mater. 2017, 1602737, doi: 10.1002/adma.201602737.
5. Morrow, S.M.; Bissette, A.J.; Fletcher, S.P. Transmission of chirality through space and across length scales. Nat. Nanotechnol. 2017, 12, 410-419, doi:10.1038/nnano.2017.62.
6. Burnham, K.S.; Schuster, G.B. Transfer of chirality from circularly polarized light to a bulk material property: Propagation of photoresolution by a liquid crystal transition.J. Am. Chem. Soc. 1999, 121, 10245-10246, doi:10.1021/ja9923033.
7. Choi, S.-W.; Izumi, T.; Hoshino, Y.; Takanishi, Y.; Ishikawa, K.; Watanabe, J.; Takezoe, H. Circular-Polarization-Induced Enantiomeric Excess in Liquid Crystals of an Achiral , Bent-Shaped Mesogen. Angew. Chemie 2006, 118, 1410-141.
8. Tejedor, R.M.; Oriol, L.; Serrano, J.L.; Ureña, F.P.; González, J.J.L. Photoinduced chiral nematic organization in an achiral glassy nematic azopolymer. Adv. Funct. Mater. 2007, 17, 3486-3492, doi:10.1002/adfm.200700202.
9. Grzelak, D.; Tupikowska, M.; Vila-Liarte, D.; Beutel, D.; Bagiński, M.; Parryszek, S.; Góra, M.; Rockstuhl, C.; Liz-Marzán, L.M.; Lewandowski, W. Liquid Crystal Templated Chiral Plasmonic Films with Dynamic Tunability and Moldability. Adv. Funct. Mater. 2022, 32, 1-12, doi:10.1002/adfm.202111280.
10. Chen, D.; Tuchband, M.R.; Horanyi, B.; Korblova, E.; Walba, D.M.; Glaser, M.A.; Maclennan, J.E.; Clark, N.A. Diastereomeric liquid crystal domains at the mesoscale. Nat. Commun. 2015, 6, 7763, doi:10.1038/ncomms8763.
11. Palmans, A.R.A.; Meijer, E.W. Amplification of chirality in dynamic supramolecular aggregates. Angew. Chemie - Int. Ed. 2007, 46, 8948-8968, doi:10.1002/anie.200701285.
12. Kang, J.S.; Kang, S.; Suh, J.M.; Park, S.M.; Yoon, D.K.; Lim, M.H.; Kim, W.Y.; Seo, M. Circularly Polarized Light Can Override and Amplify Asymmetry in Supramolecular Helices. J. Am. Chem. Soc. 2022, 144, 2657-2666, doi:10.1021/jacs.1c11306.
13. Chaikin, P.M.; Lubensky, T.C. Phases of Matter: Principles of Condensed Matter Physics.; Press, C.U., Ed.; 2000; Vol. 273; ISBN 0521432243.
14. Wu, J.-S.; Smalyukh, I.I. Hopfions, heliknotons, skyrmions, torons and both abelian and nonabelian vortices in chiral liquid crystals. Liquid Crystals Reviews 2022, doi:10.1080/21680396.2022.2040058.
15. Yuan, Y.; Martinez, A.; Senyuk, B.; Tasinkevych, M.; Smalyukh, I.I. Chiral liquid crystal colloids. Nat. Mater. 2018, 17, 71-78, doi:10.1038/NMAT5032.
16. Hess, A.J.; Poy, G.; Tai, J.S.B.; Žumer, S.; Smalyukh, I.I. Control of Light by Topological Solitons in Soft Chiral Birefringent Media. Phys. Rev. X 2020, 10, 32-40, doi:10.1103/PhysRevX.10.031042.
17. Nys, I.; Stebryte, M.; Ussembayev, Y.Y.; Beeckman, J.; Neyts, K. Tilted Chiral Liquid Crystal Gratings for Efficient Large-Angle Diffraction. Adv. Opt. Mater. 2019, 7, doi: 10.1002/adom.201901364
18. Nys, I. Patterned surface alignment to create complex three-dimensional nematic and chiral nematic liquid crystal structures. Liq. Cryst. Today 2020, 29, 65-83, doi:10.1080/1358314X.2020.1886780.
19. Albano, G.; Pescitelli, G.; Di Bari, L. Chiroptical Properties in Thin Films of π-Conjugated Systems. Chem. Rev. 2020, 120, 10145-10243, doi:10.1021/acs.chemrev.0c00195.
20. Kim, B.C.; Choi, H.J.; Lee, J.J.; Araoka, F.; Choi, S.W. Circularly Polarized Luminescence Induced by Chiral Super Nanospaces. Adv. Funct. Mater. 2019, 29, 1903246, doi:10.1002/adfm.201903246.
21. Lewandowski, W.; Vaupotič, N.; Pociecha, D.; Górecka, E.; Liz-Marzán, L.M. Chirality of Liquid Crystals Formed from Achiral Molecules Revealed by Resonant X-Ray Scattering. Adv. Mater. 2020, 32, doi:10.1002/adma.201905591.
22. Lewandowski, W.; Szustakiewicz, P.; Kowalska, N.; Grzelak, D.; Narushima, T.; Góra, M.; Bagiński, M.; Pociecha, D.; Okamoto, H.; Liz-Marzán, L.M. Supramolecular chirality synchronization in thin films of plasmonic nanocomposites. ACS Nano 2020, 14, 12918-12928, doi:10.1021/acsnano.0c03964.
23. Bagiński, M.; Tupikowska, M.; González-Rubio, G.; Wójcik, M.; Lewandowski, W. Shaping Liquid Crystals with Gold Nanoparticles: Helical Assemblies with Tunable and Hierarchical Structures Via Thin-Film Cooperative Interactions. Adv. Mater. 2020, 32, 1904581, doi:10.1002/adma.201904581.
24. Lin, D.; Fan, P.; Hasman, E.; Brongersma, M.L. Dielectric gradient metasurface optical elements. Science. 2014, 345, 298-302, doi:10.1126/science.1253213.
25. Shi, J.; Pollard, M.E.; Angeles, C.A.; Chen, R.; Gates, J.C.; Charlton, M.D.B. Photonic crystal and quasi-crystals providing simultaneous light coupling and beam splitting within a low refractive-index slab waveguide. Sci. Rep. 2017, 7, 1812, doi:10.1038/s41598-017-01842-w.
26. Rybin, M. V.; Samusev, K.B.; Lukashenko, S.Y.; Kivshar, Y.S.; Limonov, M.F. Transition from two-dimensional photonic crystals to dielectric metasurfaces in the optical diffraction with a fine structure. Sci. Rep. 2016, 6, 30773, doi:10.1038/srep30773.
27. Rojas-Rojas, S.; Barriga, E.; Muñoz, C.; Solano, P.; Hermann-Avigliano, C. Manipulation of multimode squeezing in a coupled waveguide array. Phys. Rev. A 2019, 100, 023841, doi:10.1103/PhysRevA.100.023841.
28. Kirsch, M.S.; Zhang, Y.; Kremer, M.; Maczewsky, L.J.; Ivanov, S.K.; Kartashov, Y. V.; Torner, L.; Bauer, D.; Szameit, A.; Heinrich, M. Nonlinear second-order photonic topological insulators. Nat. Phys. 2021, 17, 995-1000, doi:10.1038/s41567-021-01275-3.
29. Hu, Z.; Bongiovanni, D.; Jukic, D.; Jajtić, E.; Xia, S.; Song, D.; Xu, J.; Morandotti, R.; Buljan, H.; Chen, Z. Nonlinear control of photonic higher-order topological bound states in the continuum. Light Sci. Appl. 2021, 10, doi:10.1038/s41377-021-00607-5.
30. Dudley, J.M.; Genty, G.; Coen, S. Supercontinuum generation in photonic crystal fiber. Rev. Mod. Phys. 2006, 78, 1135-1184, doi:10.1103/RevModPhys.78.1135.
31. Park, W.; Ha, T.; Jung, T.S.; Sim, K.I.; Kim, J.H.; Wolska, J.M.; Pociecha, D.; Gorecka, E.; Kim, T.T.; Yoon, D.K. Security use of the chiral photonic film made of helical liquid crystal structures. Nanoscale 2020, 12, 21629-21634, doi:10.1039/d0nr03743e.
32. Kobashi, J.; Yoshida, H.; Ozaki, M. Planar optics with patterned chiral liquid crystals. Nat. Photonics 2016, 10, 389-392, doi:10.1038/nphoton.2016.66.
33. Ozaki, M.; Matsuhisa, Y.; Yoshida, H.; Ozaki, R.; Fujii, A. Photonic crystals based on chiral liquid crystal. Phys. Status Solidi Appl. Mater. Sci. 2007, 204, 3777-3789, doi:1 0.1 002/pssa.200776422.
34. Yao, B.; Zhao, G.; Wu, H.; Mo, C.; Meng, Z.; Luo, C.; Wang, S.; Chen, T.; Fu, Y.; Chen, Y.; et al. Chiral liquid crystalline networks demonstrating reversible optical texture and reversible fluorescence towards dynamic anti-counterfeiting. J. Lumin. 2021, 239, 118329, doi:10.1016/j.jlumin.2021.118329.
35. Shi, Y.; Han, J.; Jin, X.; Miao, W.; Zhang, Y.; Duan, P. Chiral Luminescent Liquid Crystal with Multi-State-Reversibility Breakthrough in Advanced Anti-Counterfeiting Materials. Adv. Sci. 2022, 9, 2201565, doi: 10.1002/advs.202201565.
36. Yao, W.; Lan, R.; Li, K.; Zhang, L. Multiple Anti-Counterfeiting Composite Film Based on Cholesteric Liquid Crystal and QD Materials. ACS Appl. Mater. Interfaces 2021, 13, 1424-1430, doi:10.1021/acsami.0c18132.
37. Zhang, C.; Diorio, N.; Lavrentovich, O.D.; Jákli, A. Helical nanofilaments of bent-core liquid crystals with a second twist. Nat. Commun. 2014, 5, 3302, doi:10.1038/ncomms4302.

## Claims

1. A method for controlling the spatial arrangement of domains of mesogenic compounds exhibiting the ability to synchronise chirality by controlled synchronisation of conformational chirality, wherein the area of a thin organic film of such a mesogenic compound forming a conglomerate of domains is heated above the isotropisation temperature of the mesogenic compound to obtain a specific chirality in a given area, and the shape of the heated area corresponds to a selected pattern allowing control of the crystallisation front, wherein the heating is carried out by means of area illumination with laser light of a wavelength corresponding to the high absorbance of the melted mesogenic compound, and/or area heating of a substrate, on which the thin film of the mesogenic compound is placed, and/or by area illumination with laser light of a wavelength corresponding to the high absorbance of a dye added to the thin organic film.

2. The method according to claim 1, wherein the laser light absorption causes the temperature of the thin organic film to be raised from the temperature to which the film is preheated to at least the temperature of the phase transition of the organic mesogenic compound to the isotropic phase (T_{ISO}).

3. The method according to claim 1 or 2, wherein the substrate is a transparent substrate, such as a glass plate, quartz glass, sapphire, polymer foil.

4. The method according to claim 1 or 2 or 3, wherein the heating is carried out linearly to obtain a crystallisation wave which starts from the selected domain with the desired handedness, then passes to the area with domains with undesired or mixed handedness, which as a result of chirality synchronisation initiates crystallisation of the domain with handedness in accordance with the selected, adjacent domain.

5. The method according to claim 1 or 2 or 3, wherein the heating is carried out pointwise to obtain a crystallisation wave which starts its travel pointwise, without contact with the crystallized area, in the centre of the area and moves radially outward.

6. The method of any one of claims 1-5, wherein the heating of a given area is repeated until the desired chirality is obtained.

7. The method according to any one of claims 1-6, wherein for areas with a size exceeding the maximum illuminated area at one time of the thin organic film of the mesogenic compound, exhibiting the ability to synchronise chirality, said method is controlled by applying the following steps, in which:
- a map of chiral domains is prepared for a selected area of the thin film;
- the enantiomeric excess of the desired chirality is assessed on a given area of the sample;
- if the degree of coverage is greater than a predetermined value, preferably 90%, heating of the next area is proceeded to;
- if the degree of coverage is less than a predetermined value, heating is carried out on the given area, continuing the procedure according to claim 6.

## Patentansprüche

1. Verfahren zum Steuern der räumlichen Anordnung von Domänen mesogener Verbindungen, die die Fähigkeit zum Synchronisieren der Chiralität durch gesteuerte Synchronisation der Konformationschiralität aufweisen, wobei der Bereich einer dünnen organischen Schicht einer derartigen mesogenen Verbindung, die ein Domänenkonglomerat bildet, über die Isotropisierungstemperatur der mesogenen Verbindung erwärmt wird, um eine bestimmte Chiralität in einem gegebenen Bereich zu erhalten, und die Form des erwärmten Bereichs einem ausgewählten Muster entspricht, das ein Steuern der Kristallisationsfront ermöglicht, wobei das Erwärmen mittels einer Flächenbestrahlung mit Laserlicht einer Wellenlänge, die der hohen Absorption der geschmolzenen mesogenen Verbindung entspricht, und/oder durch Flächenerwärmung eines Substrats, auf dem die dünne Schicht der mesogenen Verbindung angeordnet ist, und/oder durch Flächenbestrahlung mit Laserlicht einer Wellenlänge, die der hohen Absorption eines der dünnen organischen Schicht zugesetzten Farbstoffs entspricht, durchgeführt wird.

2. Verfahren nach Anspruch 1, wobei die Laserlichtabsorption bewirkt, dass die Temperatur der dünnen organischen Schicht von der Temperatur, auf die die Schicht vorgewärmt ist, auf wenigstens die Temperatur des Phasenübergangs der organischen mesogenen Verbindung in die isotrope Phase (T_{ISO}) angehoben wird.

3. Verfahren nach Anspruch 1 oder 2, wobei das Substrat ein transparentes Substrat ist, wie beispielsweise eine Glasplatte, ein Quarzglas, ein Saphir oder eine Polymerfolie.

4. Verfahren nach Anspruch 1 oder 2 oder 3, wobei das Erwärmen linear durchgeführt wird, um eine Kristallisationswelle zu erhalten, die von der ausgewählten Domäne mit der gewünschten Händigkeit ausgeht und dann in den Bereich mit Domänen mit unerwünschter oder gemischter Händigkeit übergeht, was als Ergebnis der Chiralitätssynchronisation die Kristallisation der Domäne mit der Händigkeit entsprechend der ausgewählten, benachbarten Domäne initiiert.

5. Verfahren nach Anspruch 1 oder 2 oder 3, wobei das Erwärmen punktuell durchgeführt wird, um eine Kristallisationswelle zu erhalten, die ihre Ausbreitung punktuell, ohne Kontakt mit dem kristallisierten Bereich, in der Mitte des Bereichs beginnt und sich radial nach außen bewegt.

6. Verfahren nach einem der Ansprüche 1 bis 5, wobei das Erwärmen eines bestimmten Bereichs wiederholt wird, bis die gewünschte Chiralität erhalten wird.

7. Verfahren nach einem der Ansprüche 1 bis 6, wobei für Bereiche, deren Größe die maximale gleichzeitig bestrahlten Fläche der dünnen organischen Schicht der mesogenen Verbindung überschreitet, die die Fähigkeit zum Synchronisieren der Chiralität aufweist, das Verfahren durch Anwenden der folgenden Schritte gesteuert wird, wobei:
- eine Karte der chiralen Domänen für einen ausgewählten Bereich der dünnen Schicht erstellt wird;
- der Enantiomerenüberschuss der gewünschten Chiralität auf einem bestimmten Bereich der Probe bewertet wird;
- wenn der Bedeckungsgrad größer als ein vorbestimmter Wert, vorzugsweise 90 %, ist, mit dem Erwärmen des nächsten Bereichs fortgefahren wird;
- wenn der Bedeckungsgrad kleiner als ein vorbestimmter Wert ist, das Erwärmen auf dem gegebenen Bereich durchgeführt wird, wobei das Verfahren gemäß Anspruch 6 fortgesetzt wird.

## Revendications

1. Procédé pour contrôler la disposition spatiale des domaines de composés mésogènes présentant la capacité de synchroniser la chiralité par synchronisation contrôlée de la chiralité conformationnelle, dans lequel la zone d'un film organique mince d'un tel composé mésogène formant un conglomérat de domaines est chauffée au-dessus de la température d'isotropisation du composé mésogène afin d'obtenir une chiralité spécifique dans une zone donnée, et la forme de la zone chauffée correspond à un motif sélectionné permettant de contrôler le front de cristallisation, dans lequel le chauffage est effectué au moyen d'un éclairage de la zone avec une lumière laser d'une longueur d'onde correspondant à la forte absorbance du composé mésogène fondu, et/ou d'un chauffage de la zone d'un substrat sur lequel est placé le film mince du composé mésogène, et/ou d'un éclairage de la zone avec une lumière laser d'une longueur d'onde correspondant à la forte absorbance d'un colorant ajouté au film organique mince.

2. Procédé selon la revendication 1, dans lequel l'absorption de la lumière laser provoque l'élévation de la température du film organique mince depuis la température à laquelle le film est préchauffé jusqu'à au moins la température de transition de phase du composé mésogène organique vers la phase isotrope (TISO ).

3. Procédé selon la revendication 1 ou 2, dans lequel le substrat est un substrat transparent, tel qu'une plaque de verre, du verre de quartz, du saphir, une feuille de polymère.

4. Procédé selon la revendication 1, 2 ou 3, dans lequel le chauffage est effectué de manière linéaire afin d'obtenir une onde de cristallisation qui commence à partir du domaine sélectionné avec la chiralité souhaitée, puis passe à la zone comportant des domaines avec une chiralité indésirable ou mixte, ce qui, à la suite de la synchronisation de chiralité, déclenche la cristallisation du domaine avec la chiralité correspondant au domaine adjacent sélectionné.

5. Procédé selon la revendication 1, 2 ou 3, dans lequel le chauffage est effectué ponctuellement afin d'obtenir une onde de cristallisation qui commence son déplacement ponctuellement, sans contact d'ion avec la zone cristallisée, au centre de la zone et se déplace radialement vers l'extérieur.

6. Procédé selon l'une quelconque des revendications 1 à 5, dans lequel le chauffage d'une zone donnée est répété jusqu'à ce que la chiralité souhaitée soit obtenue.

7. Procédé selon l'une quelconque des revendications 1 à 6, dans lequel, pour les zones dont la taille dépasse la zone maximale éclairée en une seule fois du film organique mince du composé mésogène, présentant la capacité de synchroniser la chiralité, ledit procédé est contrôlé en appliquant les étapes suivantes, dans lesquelles :
- une carte des domaines chiraux est préparée pour une zone sélectionnée du film mince ;
- l'excès énantiomérique de la chiralité souhaitée est évalué sur une zone donnée de l'échantillon ;
- si le degré de couverture est supérieur à une valeur prédéterminée, de préférence 90 %, le chauffage de la zone suivante est effectué ;
- si le degré de couverture est inférieur à une valeur prédéterminée, le chauffage est effectué sur la zone donnée, en poursuivant la procédure selon la revendication 6.
